# EUROPÄISCHE PATENTSCHRIFT

(11) **EP 3 857 194 B1**
(45) Veröffentlichungstag und Bekanntmachung des Hinweises auf die Patenterteilung: **26.03.2025**
(21) Anmeldenummer: 19752501.7
(22) Anmeldetag: 09.08.2019
(51) Int. Cl.: G01L 1/16, G01L 15/00, G01L 25/00

(54) **VERFAHREN ZUM ERMITTELN VON WENIGSTENS EINER SENSOREIGENSCHAFT EINES PIEZOELEKTRISCHEN SENSORS**
METHOD FOR ASCERTAINING AT LEAST ONE SENSOR PROPERTY OF A PIEZOELECTRIC SENSOR
PROCÉDÉ POUR LA DÉTERMINATION D'AU MOINS UNE CARACTÉRISTIQUE DE CAPTEUR D'UN CAPTEUR PIÉZOÉLECTRIQUE

(30) Priorität: 25.09.2018 DE 102018216335
(43) Veröffentlichungstag der Anmeldung: 04.08.2021
(73) Patentinhaber: Robert Bosch GmbH, 70442 Stuttgart (DE)
(72) Erfinder: CROMME, Peter, 96050 Bamberg (DE)
(86) Internationale Anmeldenummer: PCT/EP2019/071455
(87) Internationale Veröffentlichungsnummer: WO 2020/064193

(56) Entgegenhaltungen:
- DE-A1- 102015 222 246
- US-A1- 2004 194 532

## Beschreibung

Die Erfindung betrifft ein Verfahren zum Ermitteln von wenigstens einer Sensoreigenschaft eines mit einem Bauteil, insbesondere einem Injektor, verbundenen piezoelektrischen Sensors und ferner eine Vorrichtung, die insbesondere zur Durchführung des Verfahrens geeignet ist, sowie eine Produktionsanlage, welche eine derartige Vorrichtung umfasst.

### Stand der Technik

Piezoelektrische Bauteile werden beispielsweise als Sensoren zur Detektion von charakteristischen Zeitpunkten von Einspritzungen einer Brennstoffeinspitzanlage eingesetzt. Dazu wird üblicherweise ein derartiger Sensor stoffschlüssig mit dem Injektorhaltekörper der Brennstoffeinspritzanlage verbunden, damit die durch eine jeweilige Einspritzung bewirkten Schall- und Druckschwingungen auf den piezoelektrischen Sensor übertragbar und mithin von diesem in ein elektrisches Signal umsetzbar sind, das dann zur Steuerung der Nadelöffnungs- und Schließzeitpunkte des jeweiligen Injektors nutzbar ist. Zur Herstellung einer derartigen stoffschlüssigen Verbindung wird das piezoelektrische Bauteil mit relativ hoher Vorspannkraft gegen den zugeordneten Injektor gepresst und daran verschweißt. Der Schweißvorgang verändert die Vorspannkraft des Sensors massiv, die resultierende Gesamtvorspannkraft setzt sich aus der mechanischen Vorspannung und der zusätzlichen Vorspannkraft aus dem Schweißvorgang zusammen, denn die Schmelze der Schweißnaht kühlt ab, zieht sich zusammen und bewirkt eine zusätzliche mechanische Vorspannung, die nicht gemessen werden kann. Diese mechanische Gesamtvorspannkraft ist eine wesentliche Sensoreigenschaft des verbauten piezoelektrischen Sensors, da die Funktionsfähigkeit des piezoelektrischen Sensors nur sichergestellt werden kann, wenn die mechanische Vorspannkraft innerhalb eines sich typischerweise über einige hundert Newton erstreckenden Bereichs liegt.

### Neue Seite 2 der Beschreibung

Jedoch ist die mechanische Vorspannung als charakteristische Sensoreigenschaft des piezoelektrischen Sensors im verbauten Zustand mit bekannten Messtechniken weder in ausreichender Qualität noch in erforderlicher Genauigkeit messbar, was zu einer relativ hohen Ausschussquote in der Injektorfertigung führt, da eine unzureichende Vorspannung eines jeweiligen verbauten Sensors, bei welcher nicht dessen volle Funktionsfähigkeit gewährleistet ist, erst bei einer Endkontrolle am fertig assemblierten Verbundbauteil bzw. Injektor am Ende des Produktionswegs feststellbar ist.

Aus der US 2004/194532 A1 sind eine Vorrichtung und ein Verfahren für ein Messsystem zum Test von insbesondere piezoelektrischen Messwertgebern bekannt. Aus der DE 10 2015 222 246 A1 ist eine Prüfvorrichtung für die Dauerprüfung oder in-situ-Messung der piezoelektrischen Eigenschaften eines Kraftsensors bekannt.

### Offenbarung

### Vorteile der Erfindung

Das Verfahren mit den kennzeichnenden Merkmalen des Patentanspruchs 1 hat den Vorteil, dass sich durch den Einsatz des erfindungsgemäßen Verfahrens in der Produktion die Fertigungsqualität signifikant steigern lässt, da fehlerhafte Bau-teile bereits frühzeitig in der Fertigung erkennbar sind. Dazu umfasst das erfindungsgemäße Verfahren die Verfahrensschritte a) des Messens einer Vielzahl von Resonanzspektren wenigstens eines unverbauten Sensors, welche sich durch unterschiedlich eingestellte Werte der Sensoreigenschaft des wenigstens einen unverbauten Sensors voneinander unterscheiden, b) des Verarbeitens der gemessenen Resonanzspektren zusammen mit den zugeordneten Werten der Sensoreigenschaft des wenigstens einen unverbauten Sensors mittels Partial-Least-Squares-Regression, wobei am Ende der Verarbeitung ein Polynom generiert und ausgegeben wird, c) des Messens wenigstens eines Resonanzspektrums eines zu einem Verbundbauteil verbauten piezoelektrischen Sensors, und d) des Anwendens des mittels Partial-Least-Squares-Regression generierten Polynoms auf das wenigstens eine gemessene Resonanzspektrum, wobei das Polynom die zu ermittelnde Sensoreigenschaft des verbauten piezoelektrischen Sensors in Abhängigkeit des in Schritt c) gemessenen Resonanzspektrums berechnet und ausgibt.

Der Grundgedanke der Erfindung besteht mithin darin, zunächst in einer Trainingsphase eine - in statistischer Hinsicht - ausreichend große Messdatenmenge an einem Sensor in dessen unverbauten Zustand anzusammeln, wobei die

Messdatenmenge Resonanzspektren für unterschiedlich eingestellte Werte der physikalischen Sensoreigenschaft und die den Resonanzspektren zugeordneten Werte der Sensoreigenschaft umfasst, sodann mittels Partial-Least-Squares-Regression (PLS) auf der Basis der verarbeiteten Messdatenmenge ein durch ein Polynom repräsentiertes Statistikmodell zu generieren, das auf wenigstens einen zu einem Verbundbauteil verbauten Sensor angewendet wird, wobei an einem derart verbauten Sensor aufgenommene Messdaten in das das Statistikmodell repräsentierende Polynom eingespeist werden und daraus das ausführbar ausgebildete Polynom einen Wert der Sensoreigenschaft des verbauten Sensors berechnet. Für das Statistikmodell kommt dabei eine multidimensionale Regressionsanalyse mittels PLS vorteilhaft zum Einsatz, da der zugrundeliegende Algorithmus mit Eingangsgrößen zu rechnen in der Lage ist, die sehr stark korreliert und/oder interkorreliert sind, im Gegensatz zur linearen Regression, die auf solche Fälle angewendet keine aussagekräftigen bzw. zuverlässigen Resultate liefern könnte und daher als Basis für ein Statistikmodell ausscheidet.

Eine besonders bevorzugte und vorteilhafte Ausgestaltung des erfindungsgemäßen Verfahrens besteht in e) vielfachem Wiederholen der Verfahrensschritte c) bis d) entsprechend einer Anzahl von in einer Serie zu verarbeitenden Verbundbauteilen. Dabei werden die Schritte des Messens an einem verbauten Sensor und des Anwendens des Polynoms auf die Messwerte des verbauten Sensors sukzessive wiederholt durchgeführt, bis für alle Verbundbauteile einer Serie eine jeweilige Prognose berechnet ist.

Gemäß einer besonders vorteilhaften und bevorzugten Ausführungsform der Erfindung wird als Sensoreigenschaft eine die Verbindung zwischen piezoelektrischem Sensor und Bauteil in einem Verbundbauteil charakterisierende Vorspannkraft ermittelt, die als Maß für die Funktionstüchtigkeit des Verbundbauteils dient, wobei gemäß einer messtechnisch relativ einfach zu realisierenden Ausgestaltung der Erfindung vorgesehen ist, dass in den Resonanzspektren das frequenzabhängige Impedanzantwortverhalten sowohl des unverbauten piezoelektrischen Sensors als auch des verbauten Sensors erfasst wird. Bei der Analyse mittels PLS-Regression wird vorteilhaft die komplette Information der gemessenen Spektren verwertet, im Gegensatz zur klassischen Analyse von Impedanzspektren, die üblicherweise nur die Lage einzelner Resonanzfrequenzen berücksichtigt, so dass das auf die Ermittlung der Vorspannkraft als Sensoreigenschaft gerichtete erfindungsgemäße Verfahren eine zuverlässige Prognose für praktisch jeden in einem Verbundbauteil verbauten piezoelektrischen Sensor liefern kann.

Zweckmäßigerweise wird das in Schritt b) gewonnene Polynom als ausführbar ausgebildetes Programmeinheit in eine Fertigungslinie portiert, um dort Schritt d) an den Fertigungsprozess durchlaufenden Verbundbauteilen auszuführen.

In einem zwischen den Verfahrensschritte d) und e) erfolgenden Klassifizierungsschritt wird geprüft, ob die von dem Polynom gemäß Schritt d) berechnete Vorspannkraft innerhalb eines vorbestimmten Wertebereichs liegt. Mit dem Resultat des Klassifizierungsschritts wird das geprüfte Verbundbauteil bewertet und in abhängig davon als "gut" oder "schlecht" eingestuft. Mit "gut" bewertete Teile werden weiteren Stationen entlang der Fertigungslinie zugeführt, während mit "schlecht" bewertete Teile aus dem Fertigungsprozess entfernt werden können.

Eine zweckmäßige Ausgestaltung der Erfindung, mit welcher eine in statistischer Hinsicht große Messdatenmenge gesammelt wird, sieht vor, dass in Schritt a) wenigstens mehrere hundert Resonanzspektren gemessen werden, vorzugsweise etwa 700 Resonanzspektren oder mehr.

Gemäß einer bevorzugten Ausführungsform der Erfindung erfolgt zwischen Schritt b) und Schritt c) eine Validierung des gemäß Schritt b) gewonnenen Polynoms anhand eines Testdatensatzes, um die Zuverlässigkeit des durch das Polynom repräsentierten Statistikmodells zu überprüfen bzw. verifizieren.

Um möglichst viele und charakteristische Schwingungsmoden eines Sensors in einer Messreihe bzw. Messkampagne erfassen zu können, ist es zweckmäßig, dass die jeweiligen Resonanzspektren in einem Frequenzbereich gemessen werden, der vorzugsweise von etwa 400 kHz bis etwa 7 MHz reicht. Eine Obergrenze von 7 MHz ist sinnvoll, um messtechnische Artefakte auszuschließen.

Indem die Resonanzspektren mit mehreren tausend Messpunkten, vorzugsweise mit etwa 2400 Messpunkten oder mehr, erfasst werden, können praktisch extrem viele Variablen als Eingangsgröße für die PLS-Regression verwendet werden.

Eine besonders vorteilhafte Ausgestaltung der Erfindung kann darin bestehen, dass als zusätzliche Messgröße während Schritt a) die Kapazität des isolierten Sensors gemessen und in Schritt b) zusammen mit den Resonanzspektren der Partial-Least-Squares-Regression zugeführt wird, um die Messdatenmenge auf verschiedene Sensortypen erweitern zu können, welche anhand ihrer jeweiligen Kapazität als Kenngröße in der Messdatenmenge identifizierbar sind.

Eine Weiterbildung der Erfindung kann darin bestehen, dass als zusätzlich zu ermittelnde Sensoreigenschaft des verbauten Sensors eine Ladungskonstante d₃₃ des piezoelektrischen Sensors des Verbundbauteils berechnet wird, wobei in Schritt a) zusätzlich die Ladungskonstante eines unverbauten Sensors gemessen wird und in Schritt b) zusammen mit den Resonanzspektren mittels Partial-Least-Squares-Regression verarbeitet wird. Dadurch ist es möglich, verhältnismäßig langsame und aufwendige d₃₃-Messungen mittels eines Berlincourtmeters an verbauten Sensoren durch das erfindungsgemäße Verfahren kosteneffizient zu ersetzen.

Eine Vorrichtung, die insbesondere zur Durchführung des Verfahrens während der Produktionsphase dient, umfasst einen Impedanzanalysator zum Erzeugen von Resonanzspektren und eine Recheneinheit, die zur Anwendung des mittels Partial-Least-Squares-Regression gewonnenen Polynoms auf wenigstens ein vom Impedanzanalysator erzeugtes Resonanzspektrum dient. Dazu steht die Recheneinheit mit dem Impedanzanalysator in elektrischer Signal- und/oder Datenübertragungsverbindung, um die vom Impedanzanalysator übermittelten Messdaten zu empfangen und mittels des Polynoms zu verarbeiten. Mithin ist die Vorrichtung aufgrund des relativ geringen apparativen Aufwands kostengünstig in die Fertigungslinie integrierbar.

Eine Produktionsanlage, die eine derartige Vorrichtung umfasst, hat den Vorteil einer hohen Fertigungsqualität, da fehlerhafte Bauteile zu einem frühen Zeitpunkt in der Produktion als Ausschuß erkannt werden, woraus ein hohes Einsparpotential resultiert.

Weitere vorteilhafte Weiterbildungen und Ausgestaltungen der Erfindung ergeben sich durch die in den Unteransprüchen aufgeführten Maßnahmen.

### Kurze Beschreibung der Zeichnungen

Ausführungsbeispiele der Erfindung sind in der nachfolgenden Beschreibung und in den beigefügten Zeichnungen näher erläutert. Letztere zeigen in schematisch gehaltenen Ansichten:

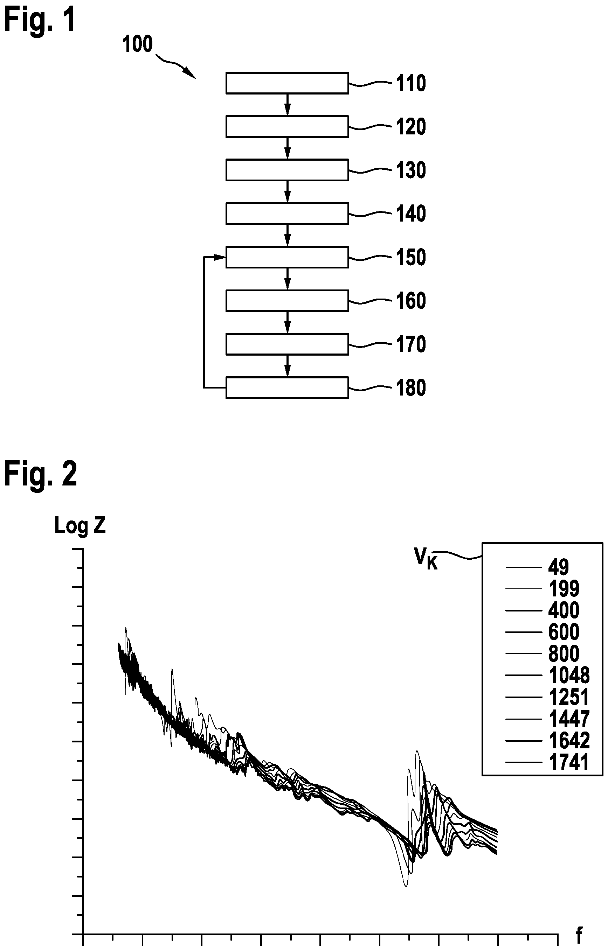

Fig. 1 ein Flussdiagramm mit wesentlichen Verfahrensstufen des erfindungsgemäßen Verfahrens,
Fig. 2 ein Messdiagramm mit für eine Trainingsphase des erfindungsgemäßen Verfahrens erzeugten Impedanzspektren eines unter Laborbedingungen isolierten Piezosensors, wobei der jeweilige Impedanzverlauf Z der Spektren für unterschiedliche am Piezosensor einwirkende Vorspannkräfte in Abhängigkeit von der jeweils eingestellten Frequenz f logarithmisch dargestellt ist,

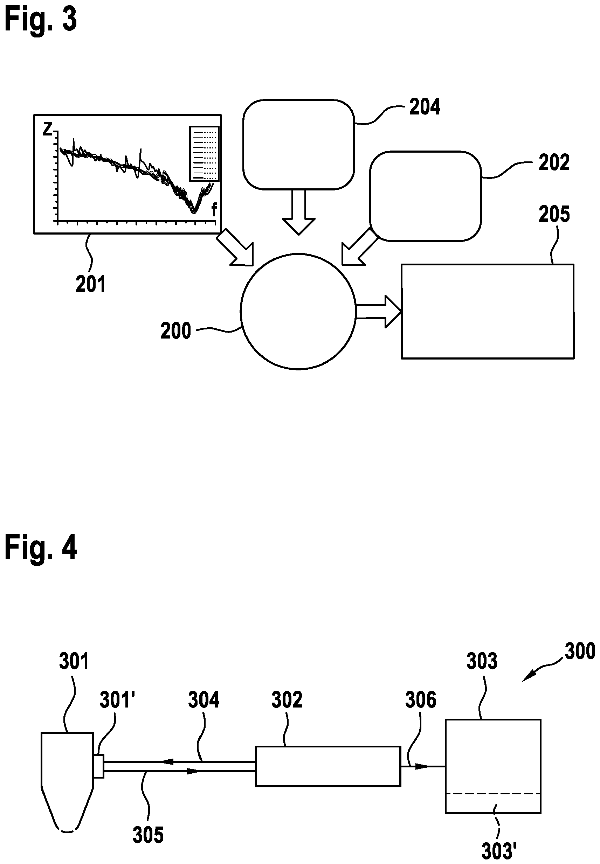

Fig. 3 ein Prinzipschema eines statistischen Modells, das in der Fertigung von Verbundteilen zur Anwendung vorgesehen ist und zur Berechnung der mechanischen Vorspannkraft, mit der ein Piezosensor an einen Injektor zur Bildung eines Verbundbauteils angeschweißt ist, mittels PLS-Regression basierend auf Impedanzspektren eines isolierten Piezosensors und dessen gemessener Kleinsignalkapazität sowie der jeweils am isolierten Piezosensor eingestellten Vorspannkraft dient, und
Fig. 4 ein rein schematisch gehaltenes Blockschaltbild einer Vorrichtung, die in der Endphase des erfindungsgemäßen Verfahrens abläuft und die in der Fertigungsstrasse integriert ist, wobei die Vorrichtung einen Impedanzanalysator zum Erzeugen eines Impedanzspektrums des jeweils in der Fertigungsstrasse befindlichen und zu prüfenden Verbundbauteils aus Injektor und Piezosensor und eine Prozessrecheneinheit zum Auswerten des jeweils erzeugten Impedanzspektrums aufweist.

### Ausführungsformen der Erfindung

Fig. 1 zeigt ein Flussdiagramm 100 mit den wesentlichen Verfahrensschritten des erfindungsgemäßen Verfahrens. Eine Trainingsphase, die in einem ersten Verfahrensschritt 110 abläuft, dient dazu, an einem eigens zu reinen Messzwecken bereitgestellten isolierten, d.h. unverbauten Piezosensor mittels einer speziellen Einrichtung (nicht dargestellt) einen Trainingsdatensatz, d.h. einen Satz von Impedanzspektren des Piezosensors mittels eines Impedanzanalysators zu erzeugen, wobei die Impedanzspektren für verschiedene Vorspannkräfte erfasst werden, die dem Piezosensor mittels der speziellen Einrichtung aufgeprägt werden. Dazu erzeugt die Einrichtung während der Aufnahme eines jeweiligen Impedanzspektrums mit einem Kraftstempel eine jeweils genau definierte und auf den in der Einrichtung während der Messreihe eingespannten Piezosensor einwirkende Vorspannkraft, um den Zustand bei einem Sensor zu simulieren, der mit einem Bauteil, z.B. einem Injektor, zu einem Verbundbauteil verbunden bzw. verschweißt und daher aufgrund der Verbindung unter einer gewissen Vorspannung steht. Somit werden in dem ersten Verfahrensschritt 110 - mittels der Einrichtung und des Impedanzanalysators - eine Anzahl von Impedanzspektren für unterschiedliche Vorspannkräfte gemessen, wobei jedes gemessene Impedanzspektrum in einer Messdatei mit Wertetupeln (f(i), Z(i), V_{K}, C_{Sensor}) abgespeichert wird, wobei die Abspeicherung im Ausführungsbeispiel im Impedanzanalysator bzw. in einer am Impedanzanalysator angeschlossenen Recheneinheit erfolgt. Mit f(i) ist die jeweilige Frequenz bezeichnet, die mittels des Impedanzanalysators erzeugt wird und auf den Piezosensor einwirkt, wobei Z(i) die bei den eingestellten Frequenzen f(i) gemessenen Impedanzen eines jeweiligen Spektrums, V_{K} die jeweils während der Aufnahme eines Spektrums anliegende Vorspannungskraft und C_{Sensor} die Kapazität des zum Messen ausgewählten Piezosensors sind und sich der Index i mit i = 1... n über die Anzahl n der Messpunkte eines jeweils aufgenommenen Spektrums erstreckt. Im bevorzugten Ausführungsbeispiel wird jedes Impedanzspektrum mit n = 2400 Messpunkten erfasst und in einer Messdatei abgespeichert, wobei zusätzlich die typischerweise ebenfalls mit dem Impedanzanalysator gemessene Kapazität als (n+1)ter, also im Ausführungsbeispiel als 2401-ter Messpunkt der Messdatei hinzugefügt wird. Am Ende der die Trainingsphase charakterisierenden Messkampagne werden die einzelnen Messdateien zu einer einzigen Messdatei M kombiniert, welche den Trainingsdatensatz bildet und als Matrix Mᵢⱼ mit Mᵢⱼ (f(i), Z(i), V_{K},(j), C_{Sensor}(j)) angelegt und abgespeichert ist. Der Index j mit j = 1 ... m dient zur Kennzeichnung der j-ten Messkurve bzw. des Impedanzspektrums aus der Anzahl m der Messkurven bzw. Impedanzspektren und mithin der Zeilenzahl der sich am Ende der Messkampagne ergebenden Messmatrix bzw. Messdatei M. Im Ausführungsbeispiel wird m = 700 gewählt, so dass sich eine statistisch betrachtet relativ große Menge von 700 gemessenen Impedanzspektren für den Trainingsdatensatz ergibt.

In Fig. 2 ist zur Veranschaulichung eine Schar von gemessenen Impedanzspektren als Trainingsdatensatz in einem Diagramm dargestellt, wobei sich die einzelnen Impedanzspektren durch unterschiedliche Vorspannkräfte voneinander unterscheiden und der - logarithmisch dargestellte - Impedanzverlauf log Z in Abhängigkeit von der Frequenz f dargestellt ist. Im Diagramm sind die den Impedanzspektren zugeordneten Vorspannkräfte in Newton angegeben und betragen 49, 199, 400, 600, 800, 1048, 1251, 1447, 1642 und 1741 Newton.

Nach Abschluss dieser Trainingsphase wird in einem sich daran anschließenden Verfahrensschritt 120 eine Partial-Least-Squares (PLS) Regression für den Trainingssatz der gemessenen Impedanzspektren durchgeführt. Dazu wird in der PLS-Regression die kombinierte Messdatei eingespeist, wobei die bei jeder einzelnen Frequenz gemessenen Impedanzwerte als Eingangsgröße, die üblicherweise als X-Variable bezeichnet wird, eingehen; die jedem gemessenen Impedanzspektrum jeweils zugeordneten Vorspannkräfte V_{K} (in Newton) gehen als Zielgröße ein, die üblicherweise als Y-Variable bezeichnet wird, da in in einer späteren und im Fertigungsprozess ablaufenden Phase des erfindungsgemäßen Verfahrens für ein jeweils zu prüfendes Verbundbauteil aus Injektor und Piezosensor die den Verbund charakterisierende Vorspannkraft berechnet werden soll.

Eine weitere Eingangsgröße für die PLS-Regression ist die Kapazität C_{Sensor} des gemessenen Piezosensors. Die PLS-Regression gibt dann als Ausgaberesultat ein Polynom (n+1)ter Ordnung aus, das - aufgrund der im Ausführungsbeispiel gewählten Messdatei M - genau 2401 Komponenten aufweist, also aus einer Linearkombination von Komponenten gebildet ist, welche sich durch die Anzahl der Einflussvariablen ergeben. Dieses Polynom dient als statistisches Modell zum Einsatz in der Fertigungslinie.

In einem darauf folgenden Verfahrensschritt 130 wird das statistische Modell anhand eines Testdatensatzes validiert. Der Testdatensatz wird ebenfalls mit der speziellen Einrichtung erzeugt und zwar wird dazu eine auf den zu Messzwecken bereitgestellten Piezosensor einwirkende Vorspannkraft V_{K} gewählt und eingestellt, die sich von den im Trainingsdatensatz eingestellten Vorspannkräften unterscheidet. Der Testdatensatz ist somit unabhängig von den Trainingsdaten. Anschließend wird der Testdatensatz dem im vorherigen Verfahrensschritt von der PLS-Regression generierten Polynom zugeführt, d.h. die Messwerte des Testdatensatzes werden in Platzhalter des Polynoms eingesetzt, worauf das als Programm arbeitende Polynom eine Vorspannkraft berechnet und ausgibt. Stimmt der vom Polynom berechnete Wert der Vorspannkraft mit der gemessenen Vorspannkraft überein, gilt das von dem Polynom repräsentierte statistische Modell als validiert und ist für die Portierung in die Fertigungslinie bereit.

Die Verfahrensschritte 110, 120 und 130 bilden einen Verfahrensblock, der außerhalb des eigentlichen Fertigungsprozesses abläuft, d.h. in einer Trainingsphase, die im Ausführungsbeispiel unter Laborbedingungen erfolgt.

In einem danach erfolgenden Verfahrensschritt 140 wird das statistische Modell in eine Fertigungsstraße transferiert, in der die Serienproduktion der Verbundbauteile stattfindet, die aus Injektor und Piezosensoren zusammengesetzt werden. Zum Transferieren des statistischen Modells wird das mit PLS-Regression erzeugte Polynom als eigenständig ausführbares Programm in einen Speicherbereich einer in der Fertigungsstraße arbeitenden Prozessrecheneinheit portiert, abgelegt und implementiert.

In einem Verfahrensschritt 150, der in der Fertigungslinie erfolgt, wird dann bei jedem im Fertigungsprozess befindlichen Verbundbauteil, das entlang der Fertigungslinie zur Mess- und Prüfstation transportiert wird, von dem daran verbauten Piezosensor ein Impedanzspektrum - mittels eines Impedanzanalysators - aufgenommen, und zusammen mit der zugleich vom Impedanzanalysator gemessenen Kapazität des Sensors (die Impedanzmessung erfolgt in einem Frequenzbereich von 400 kHz bis 7 MHz und die Kapazitätsmessung bei 1 kHz) als Messdatei abgespeichert, die an eine Prozessrecheneinheit übertragen wird, worauf in einem Schritt 160 das als Produkt der PLS-Regression generierte Polynom auf die aktuell erfassten Messdaten der Messdatei angewendet wird, d.h. in die Platzhalter bzw. Komponenten des Polynoms werden die Impedanzmesswerte Z eingesetzt, worauf das auf Basis des Trainingsdatensatzes erzeugte Polynom daraus eine Vorspannkraft in Newton berechnet.

In einem abschließenden Verfahrensschritt 170, der ebenfalls in der Fertigungslinie erfolgt, wird eine Klassifizierung der berechneten Vorspannkraft vorgenommen. Dabei wird überprüft, ob die vom Polynom berechnete Vorspannkraft innerhalb eines vordefinierten Vorspannungskraftbereichs liegt, der für die Funktion des Verbundbauteils als sicher eingestuft ist. Ergibt das Ergebnis der Überprüfung, dass die berechnete Vorspannkraft des Piezosensors innerhalb des vordefinierten Vorspannkraftbereichs liegt, so wird das Verbundbauteil als "gut" bewertet und wird in der Fertigungslinie weiter zur nächsten Fertigungsstufe transportiert. Liegt jedoch die berechnete Vorspannkraft außerhalb des vordefinierten Vorspannungskraftbereichs, so wird das Verbundbauteil mit "schlecht" bewertet und aus der Fertigungslinie entfernt.

Anschließend wird in einem Schritt 180 geprüft, ob sich ein nächstes Verbundbauteil in der Fertigungslinie im Produktionsprozess befindet und zur Mess- und Prüfstation ankommt; ergibt der Prüfschritt 180 ein positives Resultat, so erfolgt ein Rücksprung zur Schritt 150 und das nächste Verbundbauteil wird gemäß der Schritte 150, 160 und 170 prozessiert, d.h. ein jeweiliges Messspektrum wird erzeugt, auf welches dann das Polynom angewendet wird, um die diesbezügliche Vorspannkraft zu berechnen, die dann klassifiziert wird. Ergibt sich im Prüfschritt 180 jedoch ein negatives Resultat, so erfolgt eine entsprechende Rückmeldung an ein die Produktion überwachendes Steuerungssystem.

Die Verfahrensschritte 150, 160 und 170 sowie 180 bilden einen Verfahrensblock, der in der Fertigungslinie implementiert ist und dort abläuft. Die Verfahrensschritte 150, 160, 170, 180 werden vielfach wiederholt entsprechend der Anzahl der in einer Serie zu prozessierenden Verbundbauteile, so dass - nach der Klassifizierung eines mittels des Polynoms aktuell berechneten Verbundbauteils - für jedes in der Fertigungslinie nachrückende Verbundbauteil ein Rücksprung zu Verfahrensschritt 150 erfolgt.

Fig. 3 veranschaulicht anhand eines Prinzipschemas das dem erfindungsgemäßen zugrundeliegende statistische Modell 200, das in der Fertigungslinie 205 von Verbundteilen zur Anwendung kommt und zur Berechnung der mechanischen Vorspannkraft dient, welche die Verbindung eines Verbundbauteils charakterisiert, das aus einem Injektor und einem daran angeschweißten Piezosensor gebildet ist, wobei die Berechnung mittels PLS-Regression basierend auf mehreren Einflussgrößen 201, 202, 203 erfolgt, welche im Ausführungsbeispiel durch Impedanzspektren 201 eines unter Laborbedingungen isoliert bzw. unverbaut vermessenen Piezosensors und dessen gemessener Kleinsignalkapazität 202 sowie der jeweiligen am isoliert vermessenen Piezosensor eingestellten Vorspannkraft 204 repräsentiert werden.

Fig. 4 zeigt in einem stark schematisch gehaltenen Blockschaltbild 300 die zur Durchführung des erfindungsgemäßen Verfahrens in der Fertigungsphase dienende Vorrichtung, die im wesentlichen einen Impedanzanalysator 302 zur Erzeugung eines Impedanzspektrums von einem Piezosensor, der im Verbundbauteil aktuell im Fertigungsprozess während einer abschließenden Qualitätsprüfung und auch zur Überprüfung der Fertigungsqualität (eine kostensenkende Entnahme von fehlerhaften Bauteilen aus der Fertigungslinie wird dadurch zu einem frühen Zeitpunkt ermöglicht) prozessiert wird, und eine Prozessrecheneinheit 303 umfasst. Der Impedanzanalysator 302 ist über eine erste Signalleitung 304 mit dem Piezosensor 301' elektrisch wirkverbunden, um einen Frequenzbereich durchzufahren und mit Frequenzen f(i), die den Frequenzbereich bilden, auf den Piezosensor 301' einzuwirken; über eine zweite Signalleitung 305 empfängt der Impedanzanalysator 302 das jeweilige Antwortverhalten des Piezosensors 301', d.h. zu jeder einzelnen Frequenz f(i), die auf den Piezosensor einwirkt, erfasst der Impedanzanalysator 302 die jeweils zugehörige Impedanz Z(i) des Piezosensors 302.

Nach Durchfahren des gesamten Frequenzbereichs, der typischerweise von 400 kHz bis 7 MHz reicht und im Ausführungsbeispiel 2400 Messpunkte umfasst, speichert der Impedanzanalysator 302 das gewonnene Impedanzspektrum in einer Messdatei M(f(i), Z(i)) ab, wobei sich der Index i von 1 bis 2400 erstreckt. Diese Messdatei überträgt der Impedanzanalysator 302 dann über eine Datenübertragungsleitung 306 an die Prozessrecheneinheit 303.

In einem Speicherbereich 303' der Prozessrecheneinheit 303 ist das Polynom mit der im bevorzugten Ausführungsbeispiel erzeugten Ordnung 2401 abgespeichert, das dorthin bereits vor Inbetriebnahme des Serienfertigungsprozesses transferiert wurde. In das Polynom werden die Messdaten der Messdatei M(f(i), Z(i)) eingespeist und verarbeitet. Am Ende der Verarbeitung berechnet das in der Prozessrecheneinheit 303 arbeitende und die Messdaten verarbeitende Polynom eine Vorspannkraft. Die Prozessrecheneinheit 303 entscheidet dann anhand eines Prüfschritts, ob die vom Polynom berechnete Vorspannkraft innerhalb eines vordefinierten Vorspannkraftbereichs liegt, der als die Funktionstüchtigkeit des Sensors gewährleistend angesehen wird. Liegt die berechnete Vorspannkraft innerhalb dieses vordefinierten Bereichs, so bewertet das im Prozessrecheneinheit 303 ablaufende Verfahrensschritt den Verbund aus Injektor und Piezosensor als "gut", worauf der Bauteilverbund in der Fertigungslinie weiter zum nächsten Fertigungsstufe transportiert wird; liegt jedoch die berechnete Vorspannkraft außerhalb des vordefinierten Bereichs, so bewertet der in der Prozessrecheneinheit 303 gerade ablaufende Verfahrensschritt den Bauteilverbund als "schlecht" und der Bauteilverbund wird als Ausschuss aus der Fertigungslinie entfernt.

Zusammenfassend dient das erfindungsgemäße Verfahren zum Ermitteln von wenigstens einer Sensoreigenschaft eines piezoelektrischen Sensors, der mit einem Bauteil, insbesondere einem Injektor, ist zu einem Verbundbauteil fest verbunden, und umfasst die folgenden Verfahrensschritte:
Messen 110 einer Vielzahl von Resonanzspektren wenigstens eines unverbauten Sensors, welche sich durch unterschiedlich eingestellte Werte der Sensoreigenschaft des wenigstens einen unverbauten Sensors voneinander unterscheiden, Verarbeiten 120 der gemessenen Resonanzspektren zusammen mit den zugeordneten Werten der Sensoreigenschaft des wenigstens einen unverbauten Sensors mittels Partial-Least-Squares-Regression, wobei am Ende der Verarbeitung ein Polynom generiert und ausgegeben wird,
Validieren 130 des Polynoms anhand wenigstens eines Testdatensatzes, Portieren 140 des als ausführbares Programms ausgebildeten Polynoms in eine Prüfstation für Verbundbauteile innerhalb einer Fertigungslinie,
Messen 150 wenigstens eines Resonanzspektrums eines piezoelektrischen Sensors des Verbundbauteils,
Anwenden 160 des mittels Partial-Least-Squares-Regression generierten Polynoms auf das wenigstens eine gemessene Resonanzspektrum, wobei das Polynom die zu ermittelnde Sensoreigenschaft des verbauten piezoelektrischen Sensors berechnet und ausgibt,
Klassifizieren 170 des vom Polynom berechneten Werts der Sensoreigenschaft, und
vielfaches Wiederholen der Verfahrensschritte 150 bis 170 entsprechend der Anzahl von in einer Serie zu verarbeitenden Verbundbauteilen.

## Patentansprüche

1. Verfahren zum Ermitteln von wenigstens einer Sensoreigenschaft eines mit einem Bauteil, insbesondere einem Injektor, verbundenen piezoelektrischen Sensors mit folgenden Verfahrensschritten:
a) Messen (110) einer Vielzahl von Resonanzspektren wenigstens eines unverbauten Sensors, welche sich durch unterschiedlich eingestellte Werte der Sensoreigenschaft des wenigstens einen unverbauten Sensors voneinander unterscheiden;
b) Verarbeiten (120) der gemessenen Resonanzspektren zusammen mit den zugeordneten Werten der Sensoreigenschaft des wenigstens einen unverbauten Sensors mittels Partial-Least-Squares-Regression, wobei am Ende der Verarbeitung ein Polynom generiert und ausgegeben wird;
c) Messen (150) wenigstens eines Resonanzspektrums eines zu einem Verbundbauteil verbauten piezoelektrischen Sensors; und
d) Anwenden (160) des mittels Partial-Least-Squares-Regression generierten Polynoms auf das wenigstens eine gemessene Resonanzspektrum, wobei das Polynom die zu ermittelnde Sensoreigenschaft des verbauten piezoelektrischen Sensors berechnet und ausgibt, wobei als Sensoreigenschaft eine die Verbindung zwischen piezoelektrischem Sensor (301') und Bauteil (301) im Verbundbauteil charakterisierende Vorspannkraft ermittelt wird.

2. Verfahren nach Anspruch 1, **gekennzeichnet durch** e) vielfaches Wiederholen der Verfahrensschritte c) bis d) entsprechend einer Anzahl von in einer Serie zu verarbeitenden Verbundbauteilen.

3. Verfahren nach Anspruch 1 oder 2, **dadurch gekennzeichnet, dass** in den Resonanzspektren das frequenzabhängige Impedanzantwortverhalten sowohl des unverbauten piezoelektrischen Sensors als auch des verbauten Sensors (301') erfasst wird.

4. Verfahren nach Anspruch 2 oder 3, **dadurch gekennzeichnet, dass** die Schritte c) bis e) in einer Fertigungslinie erfolgen.

5. Verfahren nach einem der Ansprüche 2 bis 4, **dadurch gekennzeichnet, dass** in einem zwischen den Verfahrensschritten d) und e) erfolgenden Klassifizierungsschritt (170) geprüft wird, ob die von dem Polynom gemäß Schritt d) berechnete Vorspannkraft innerhalb eines vorbestimmten Wertebereichs liegt.

6. Verfahren nach einem der vorherigen Ansprüche, **dadurch gekennzeichnet, dass** ein Portieren (140) des in Schritt b) gewonnenen Polynoms in eine Fertigungslinie erfolgt, um dort Schritt d) an in der Fertigungslinie durchlaufenden Verbundbauteilen auszuführen.

7. Verfahren nach einem der vorherigen Ansprüche, **dadurch gekennzeichnet, dass** zwischen Schritt b) und Schritt c) eine Validierung (130) des gemäß Schritt b) gewonnenen Polynoms anhand eines Testdatensatzes erfolgt.

8. Verfahren nach einem der vorherigen Ansprüche, **dadurch gekennzeichnet, dass** die jeweiligen Resonanzspektren in einem Frequenzbereich gemessen werden, der vorzugsweise von etwa 400 kHz bis etwa 7 MHz reicht.

9. Verfahren nach einem der vorherigen Ansprüche, **dadurch gekennzeichnet, dass** als zusätzliche Messgröße während Schritt a) die Kapazität des unverbauten Sensors gemessen und in Schritt b) zusammen mit den Resonanzspektren der Partial-Least-Squares-Regression zugeführt wird.

10. Verfahren nach einem der vorstehenden Ansprüche, **dadurch gekennzeichnet, dass** als Sensoreigenschaft eine Ladungskonstante d₃₃ des verbauten piezoelektrischen Sensors berechnet wird, wobei in Schritt a) zusätzlich die Ladungskonstante des unverbauten Sensors gemessen wird und in Schritt b) zusammen mit den Resonanzspektren mittels Partial-Least-Squares-Regression verarbeitet wird.

11. Verfahren nach einem der vorstehenden Ansprüche, **dadurch gekennzeichnet, dass** in Schritt a) wenigstens mehrere hundert Resonanzspektren gemessen werden, vorzugsweise etwa 700 Resonanzspektren oder mehr.

12. Verfahren nach einem der vorstehenden Ansprüche, **dadurch gekennzeichnet, dass** die Resonanzspektren mit mehreren tausend Messpunkten, vorzugsweise mit etwa 2400 Messpunkten oder mehr, erfasst werden.

13. Vorrichtung zum Ermitteln von wenigstens einer Vorspannkraft als Sensoreigenschaft gemäß des Verfahrens nach einem der vorherigen Ansprüche mit einem Impedanzanalysator (302) zum Erzeugen von Resonanzspektren gemäß einem der vorherigen Ansprüche und einer Recheneinheit (303), die zur Anwendung des mittels Partial-Least-Squares-Regression gewonnenen Polynoms gemäß einem der vorherigen Ansprüche auf wenigstens ein vom Impedanzanalysator (302) erzeugtes Resonanzspektrum dient.

14. Vorrichtung nach Anspruch 13, **dadurch gekennzeichnet, dass** die Recheneinheit (303) mit dem Impedanzanalysator (302) in elektrischer Signal- und/oder Datenübertragungsverbindung (306) steht.

15. Vorrichtung nach Anspruch 13 oder 14, **dadurch gekennzeichnet, dass** die Vorrichtung in einer Fertigungslinie integriert ist.

16. Produktionsanlage umfassend eine Vorrichtung nach einem der Ansprüche 13 bis 15.

## Claims

1. Method for determining at least one sensor property of a piezoelectric sensor connected to a component, in particular an injector, having the following method steps:
a) measuring (110) a multiplicity of resonance spectra of at least one uninstalled sensor, which differ from each other by virtue of differently set values of the sensor property of the at least one uninstalled sensor;
b) processing (120) the measured resonance spectra together with the assigned values of the sensor property of the at least one uninstalled sensor by means of partial least squares regression, a polynomial being generated and output at the end of the processing;
c) measuring (150) at least one resonance spectrum of a piezoelectric sensor installed to produce a composite component; and
d) applying (160) the polynomial generated by means of partial least squares regression to the at least one measured resonance spectrum, wherein the polynomial calculates and outputs the sensor property to be determined for the installed piezoelectric sensor, the sensor property determined being a prestressing force characterizing the connection between the piezoelectric sensor (301') and the component (301) in the composite component.

2. Method according to Claim 1, **characterized by** e) multiple repetition of method steps c) to d) according to a number of composite components to be processed in a series.

3. Method according to Claim 1 or 2, **characterized in that** the frequency-dependent impedance response behaviour of both the uninstalled piezoelectric sensor and the installed sensor (301') is recorded in the resonance spectra.

4. Method according to Claim 2 or 3, **characterized in that** steps c) to e) take place on a production line.

5. Method according to one of Claims 2 to 4, **characterized in that** a classification step (170) taking place between method steps d) and e) comprises checking whether the prestressing force calculated by the polynomial according to step d) is within a predetermined value range.

6. Method according to one of the preceding claims, **characterized in that** the polynomial obtained in step b) is ported (140) to a production line in order to carry out step d) there on composite components passing through the production line.

7. Method according to one of the preceding claims, **characterized in that** between step b) and step c) the polynomial obtained according to step b) is validated (130) on the basis of a test data set.

8. Method according to one of the preceding claims, **characterized in that** the respective resonance spectra are measured in a frequency range that preferably extends from approximately 400 kHz to approximately 7 MHz.

9. Method according to one of the preceding claims, **characterized in that** the capacitance of the uninstalled sensor is measured as an additional measured variable during step a) and is supplied to the partial least squares regression together with the resonance spectra in step b).

10. Method according to one of the preceding claims, **characterized in that** the sensor property calculated is a charge constant d₃₃ of the installed piezoelectric sensor, wherein the charge constant of the uninstalled sensor is additionally measured in step a) and is processed by means of partial least squares regression together with the resonance spectra in step b).

11. Method according to one of the preceding claims, **characterized in that** at least several hundred resonance spectra are measured in step a), preferably approximately 700 resonance spectra or more.

12. Method according to one of the preceding claims, **characterized in that** the resonance spectra are recorded with several thousand measurement points, preferably with approximately 2400 measurement points or more.

13. Device for determining at least one prestressing force as a sensor property using the method according to one of the preceding claims, having an impedance analyser (302) for generating resonance spectra according to one of the preceding claims and a computing unit (303) that is used to apply the polynomial obtained by means of partial least squares regression according to one of the preceding claims to at least one resonance spectrum generated by the impedance analyser (302).

14. Device according to Claim 13, **characterized in that** the computing unit (303) has an electrical signalling and/or data transmission connection (306) to the impedance analyser (302).

15. Device according to Claim 13 or 14, **characterized in that** the device is integrated in a production line.

16. Production plant comprising a device according to one of Claims 13 to 15.

## Revendications

1. Procédé de détermination d'au moins une caractéristique de capteur d'un capteur piézoélectrique relié à un composant, en particulier un injecteur, comprenant les étapes de procédé suivantes :
a) mesurer (110) une pluralité de spectres de résonance d'au moins un capteur non-installé, qui se distinguent les uns des autres par des valeurs réglées différemment de la caractéristique de capteur dudit au moins un capteur non-installé ;
b) traiter (120) les spectres de résonance mesurés conjointement avec les valeurs associées de la caractéristique de capteur dudit au moins un capteur non-installé au moyen d'une régression des moindres carrés partiels, un polynôme étant généré et délivré en sortie à la fin du traitement ;
c) mesurer (150) au moins un spectre de résonance d'un capteur piézoélectrique installé dans un élément composite ; et
d) appliquer (160) le polynôme généré au moyen de la régression des moindres carrés partiels audit au moins un spectre de résonance mesuré, le polynôme calculant et délivrant en sortie la caractéristique de capteur à déterminer du capteur piézoélectrique installé, une force de précontrainte caractérisant la liaison entre le capteur piézoélectrique (301') et le composant (301) dans la pièce composite étant déterminée comme étant une caractéristique du capteur.

2. Procédé selon la revendication 1, **caractérisé par** e) la répétition plusieurs fois des étapes c) à d) du procédé en fonction d'un nombre de pièces composites à traiter en série.

3. Procédé selon la revendication 1 ou la revendication 2, **caractérisé en ce que** le comportement de réponse d'impédance dépendant de la fréquence est détecté dans les spectres de résonance aussi bien du capteur piézoélectrique non-installé que du capteur installé (301').

4. Procédé selon la revendication 2 ou la revendication 3, **caractérisé en ce que** les étapes c) à e) sont mises en œuvre sur une ligne de fabrication.

5. Procédé selon l'une des revendications 2 à 4, **caractérisé en ce que**, lors d'une étape de classification (170) mise en œuvre entre les étapes d) et e) du procédé, il est vérifié si la force de précontrainte calculée par le polynôme selon l'étape d) est comprise dans une gamme de valeurs prédéterminée.

6. Procédé selon l'une des revendications précédentes, **caractérisé en ce qu'**on effectue un portage (140) du polynôme obtenu à l'étape b) dans une ligne de fabrication pour y mettre en œuvre l'étape d) sur des pièces composites défilant dans la ligne de fabrication.

7. Procédé selon l'une des revendications précédentes, **caractérisé en ce qu'**entre l'étape b) et l'étape c), une validation (130) du polynôme obtenu selon l'étape b) est effectuée en utilisant un jeu de données de test.

8. Procédé selon l'une des revendications précédentes, **caractérisé en ce que** les spectres de résonance respectifs sont mesurés dans une gamme de fréquences qui s'étend de préférence d'environ 400 kHz à environ 7 MHz.

9. Procédé selon l'une des revendications précédentes, **caractérisé en ce que** la capacité du capteur non-installé est mesurée en tant que grandeur de mesure supplémentaire pendant l'étape a) et, à l'étape b), est introduite, avec les spectres de résonance, dans la régression des moindres carrés partiels.

10. Procédé selon l'une des revendications précédentes, **caractérisé en ce qu'**une constante de charge d₃₃ du capteur piézoélectrique installé est calculée en tant que caractéristique du capteur, la constante de charge du capteur non-installé étant en outre mesurée à l'étape a) et étant traitée à l'étape b) avec les spectres de résonance au moyen de la régression des moindres carrés partiels.

11. Procédé selon l'une des revendications précédentes, **caractérisé en ce qu'**à l'étape a), au moins plusieurs centaines de spectres de résonance sont mesurés, de préférence environ 700 spectres de résonance ou plus.

12. Procédé selon l'une des revendications précédentes, **caractérisé en ce que** les spectres de résonance sont acquis avec plusieurs milliers de points de mesure, de préférence avec environ 2400 points de mesure ou plus.

13. Dispositif pour déterminer au moins une force de précontrainte en tant que caractéristique de capteur selon le procédé selon l'une des revendications précédentes, comprenant un analyseur d'impédance (302) pour générer des spectres de résonance selon l'une des revendications précédentes et une unité de calcul (303) servant à appliquer le polynôme obtenu par régression des moindres carrés partiels selon l'une des revendications précédentes à au moins un spectre de résonance généré par l'analyseur d'impédance (302).

14. Dispositif selon la revendication 13, **caractérisé en ce que** l'unité de calcul (303) est en liaison électrique de transmission de signaux et/ou de données (306) avec l'analyseur d'impédance (302).

15. Dispositif selon la revendication 13 ou la revendication 14, **caractérisé en ce que** le dispositif est installé dans une ligne de fabrication.

16. Installation de production comprenant un dispositif selon l'une des revendications 13 à 15.
